# EUROPÄISCHE PATENTSCHRIFT

(11) **EP 4 639 099 B1**
(45) Veröffentlichungstag und Bekanntmachung des Hinweises auf die Patenterteilung: **07.10.2026**
(21) Anmeldenummer: 23833626.7
(22) Anmeldetag: 13.12.2023
(51) Int. Cl.: G01F 1/58, G01F 1/60, G01F 25/10

(54) **MAGNETISCH-INDUKTIVES DURCHFLUSSMESSGERÄT**
MAGNETIC-INDUCTIVE FLOWMETER
DÉBITMÈTRE MAGNÉTO-INDUCTIF

(30) Priorität: 20.12.2022 DE 102022134026
(43) Veröffentlichungstag der Anmeldung: 29.10.2025
(73) Patentinhaber: Endress+Hauser Flowtec AG, 4153 Reinach (CH)
(72) Erfinder: MEYER, Christoph, 4127 Birsfelden (CH); RÜFENACHT, Markus, 4442 Diepflingen (CH); SPAHLINGER, Andre, 79415 Bad Bellingen (DE); TSCHAMBSER, Florent, 68220 Hesingue (FR)
(74) Vertreter: Endress + Hauser Group Services (Deutschland) AG+Co. KG
(86) Internationale Anmeldenummer: PCT/EP2023/085595
(87) Internationale Veröffentlichungsnummer: WO 2024/132775

(56) Entgegenhaltungen:
- DE-A1- 102009 045 904
- DE-C2- 2 363 522
- JP-B2- 2 846 302
- US-A1- 2009 071 264

## Beschreibung

Die Erfindung betrifft ein magnetisch-induktives Durchflussmessgerät.

Magnetisch-induktive Durchflussmessvorrichtungen werden zur Bestimmung der Durchflussgeschwindigkeit und des Volumendurchflusses eines fließenden Mediums in einer Rohrleitung eingesetzt. Dabei werden inline magnetisch-induktive Durchflussmessgeräte von magnetisch-induktiven Durchflussmesssonden unterschieden, die in eine seitliche Öffnung einer Rohrleitung eingesetzt werden. Ein magnetisch-induktives Durchflussmessgerät weist eine magnetfelderzeugende Vorrichtung zum Erzeugen eines Magnetfeldes auf. Eine Hauptachse des Magnetfeldes verläuft dabei im Wesentlichen senkrecht zur Flussrichtung des fließenden Mediums. Dafür werden üblicherweise Sattel- oder Zylinderspulen verwendet. Um ein überwiegend homogenes Magnetfeld zu realisieren, werden zusätzlich Polschuhe so geformt und relativ zur Strömungsrichtung angebracht, dass die Magnetfeldlinien über den gesamten Rohrquerschnitt im Wesentlichen senkrecht zur Querachse bzw. parallel zur Vertikalachse des Messrohres verlaufen. Zudem weist ein magnetisch-induktives Durchflussmessgerät ein Messrohr zum Führen des Mediums auf, auf dessen äußeren Mantelfläche die magnetfelderzeugende Vorrichtung angeordnet ist. Ein an die Mantelfläche des Messrohres angebrachtes Messelektrodenpaar greift eine senkrecht zur Flussrichtung und zum Magnetfeld anliegende elektrische Messspannung bzw. Potenzialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der gemessenen induzierten Messspannung die Durchflussgeschwindigkeit und/oder - mit Hinzunahme eines bekannten Rohrquerschnitts - der Volumendurchfluss ermittelt werden.

Im Gegensatz zu einem magnetisch-induktiven Durchflussmessgerät, welches ein Messrohr zum Führen des Mediums mit angebrachter Vorrichtung zum Erzeugen eines das Messrohr durchdringenden Magnetfeldes und Messelektroden umfasst, werden magnetisch-induktive Durchflussmesssonden mit ihrem üblicherweise kreiszylindrischen Gehäuse in eine seitliche Öffnung einer Rohrleitung eingeführt und fluiddicht fixiert. Ein spezielles Messrohr ist nicht mehr notwendig. Die eingangs erwähnte Messelektrodenanordnung und Spulenanordnung auf der Mantelfläche des Messrohrs entfällt, und wird durch ein im Inneren des Gehäuses und in unmittelbarer Nähe zu den Messelektroden angeordnete Vorrichtung zur Erzeugung eines Magnetfeldes ersetzt, welche so ausgestaltet ist, dass eine Symmetrieachse der Magnetfeldlinien des erzeugten Magnetfeldes die Frontfläche bzw. die Fläche zwischen den Messelektroden senkrecht schneidet. Im Stand der Technik gibt es bereits eine Vielzahl an unterschiedlichen magnetisch-induktiven Durchflussmesssonden.

Magnetisch-induktive Durchflussmessvorrichtungen finden vielfach Anwendung in der Prozess- und Automatisierungstechnik für Fluide ab einer elektrischen Leitfähigkeit von etwa 5 µS/cm. Entsprechende Durchflussmessvorrichtungen werden von der Anmelderin in unterschiedlichsten Ausführungsformen für verschiedene Anwendungsbereiche beispielsweise unter der Bezeichnung PROMAG oder MAGPHANT vertrieben. Die DE 10 2009 045 904 A1 lehrt beispielsweise ein magnetisch-induktives Durchflussmessgerät welches über digitalisierte Messwerte bzw. Differenzsignale und eine interne Auswertung dieser eine Aussage über den Zustand des Durchflussmessgerätes machen kann.

Die US 2009/071264 A1 beschreibt ein magnetisch-induktives Durchflussmessgerät, das seine Kalibrierdaten dynamisch aktualisiert, wobei ein Analog-Digital Umwandler als erste und zentrale Komponente mithilfe einer temperaturstabilen Referenzspannung (0 V und VREF) selbstkalibriert wird. Aus den gemessenen Digitalkonversionen bestimmt das System ADC-Offset und -Gain, die anschließend als Grundlage für die Kalibrierung aller weiteren Signalpfade dienen. Durch diese fortlaufende ADC-Referenzkalibrierung erreicht das Flowmeter hohe Genauigkeit auch bei Temperaturänderungen und Bauteilalterung.

Die DE 23 63 522 C2 beschreibt eine Korrekturschaltung für analoge Signalverarbeitung, bei der ein Vergleicher während einer Abgleichphase ein Prüfsignal mit einem gespeicherten Korrektursignal vergleicht und dieses über ein Register sowie einen Digital-Analog-Umsetzer präzise einstellt. Das Prüfsignal wird zunächst digitalisiert, im Register gespeichert und anschließend wieder in ein analoges Korrektursignal umgewandelt, wodurch eine stabile und langzeitige Speicherung ohne die Nachteile von Kondensatoren erreicht werden soll.

Die JP2846302B2 betrifft eine Messverstärkerschaltung für magnetisch-induktive Durchflussmesser, bei der die analogen Signale der Messelektroden über Vorverstärker direkt an Analog-Digital-Umsetzer mit hoher Abtastfrequenz (>1 kHz, bevorzugt 5-50 kHz) weitergeleitet werden. Durch die schnelle Digitalisierung wird eine präzise Trennung von Nutzsignal und Störanteilen ermöglicht, sodass auch bei Medien mit hohem Feststoffanteil eine genaue Durchflussmessung ohne Erhöhung des Spulenstroms erreicht wird. Die digitalisierten Signale werden anschließend in einer Subtraktionsstufe verarbeitet, um Differenzsignale für die Volumenstromberechnung bereitzustellen.

Die EP 2 074 385 B1 offenbart ein magnetisch-induktives Durchflussmessgerät mit einer Messschaltung, die dazu eingerichtet ist den Durchfluss zu messen, während zeitgleich eine Verifizierungsschaltung dazu eingerichtet ist, mehrere Parameter des magnetisch-induktiven Durchflussmessgerätes zu messen und diese mit bereitgestellte Werte zu vergleichen. Zu den zu verifizierenden Parametern gehören der Spulenwiderstand, die Spuleninduktivität, der Elektrodenwiderstand, das Ausgangssignal und den Strompegel des Treibersignals. Wird der Durchfluss während der Verifizierung bzw. einer Diagnose gemessen, so kann es zu einer Wechselwirkung zwischen dem Verifizierungssignal bzw. Diagnosesignale und dem gemessenen Durchflussmesssignal kommen, was in einem Messfehler resultiert.

Der Erfindung liegt die Aufgabe zugrunde dem Problem Abhilfe zu schaffen.

Die Aufgabe wird gelöst durch das magnetisch-induktive Durchflussmessgerät nach Anspruch 1.

Das erfindungsgemäße magnetisch-induktives Durchflussmessgerät zum Ermitteln einer strömungsgeschwindigkeitsabhängigen Messgröße eines fließfähigen Mediums, umfassend:
- ein Messrohr zum Führen des Mediums;
- mindestens eine Messelektrode angeordnet ist;
- eine weitere Elektrode angeordnet ist;
- eine magnetfelderzeugende Vorrichtung zum Erzeugen eines das Messrohr zumindest abschnittsweise durchdringenden Magnetfeldes;
   - eine Messschaltung mit einem Mikrocontroller einen ersten Analog-Digital-Umsetzer aufweist, welcher elektrisch mit der mindestens einen Messelektrode und dem Mikrocontroller verbunden ist,
      **wobei** der erste Analog-Digital-Umsetzer dazu eingerichtet ist, ein über die mindestens eine Messelektrode bereitgestelltes analoges Durchfluss-Messsignal d in ein digitales Durchfluss-Messsignal D umzuwandeln,
      **wobei** die Messschaltung einen Digital-Analog-Umsetzer aufweist, welcher elektrisch mit der weiteren Elektrode verbunden ist,
      **wobei** der Digital-Analog-Umsetzer dazu eingerichtet ist, ein über den Microcontroller bereitgestelltes digitales Einspeis-Testsignal A in eine analoges Einspeis-Testsignal a umzuwandeln und dieses in die weitere Elektrode einzuspeisen,
      **wobei** die Messschaltung einen zweiten Analog-Digital-Umsetzer aufweist, welcher elektrisch mit der weiteren Elektrode verbunden ist,
      **wobei** der zweite Analog-Digital-Umsetzer dazu eingerichtet ist, ein über die weitere Elektrode bereitgestelltes analoges Test-Messsignal a* in ein digitales Test-Messsignal A* umzuwandeln,
      **wobei** der Mikrocontroller dazu eingerichtet ist, mittels einer Korrelation den Anteil des digitalen Test-Messsignales A* vom digitalen Durchfluss-Messsignal D zu extrahieren und anhand des korrigierten Durchfluss-Messsignales D' die strömungsgeschwindigkeitsabhängige Messgröße zu bestimmen, und/oder
      **wobei** der Mikrocontroller dazu eingerichtet ist, insbesondere gleichzeitig zur Bestimmung der strömungsgeschwindigkeitsabhängige Messgröße, abhängig vom digitalen Test-Messsignal A* und vom, insbesondere digitalen, Einspeis-Testsignal A eine Diagnosegröße oder eine Prozessgröße zu bestimmen.

Gemäß der erfindungsgemäßen Lösung lassen sich eine Diagnose und eine Durchflussmessung gleichzeitig durchführen, ohne dass die Diagnose Einfluss auf die Bestimmung des aktuellen Durchflusses nimmt. Gleichzeitig im Sinne der Erfindung bedeutet, dass die Durchflussmessung nicht unterbrochen werden muss, wenn eine Diagnose durchgeführt wird. Ein analoges Einspeis-Testsignal a kann auch dann über eine der Elektroden (Messelektrode, Referenzelektrode und/oder Füllstandsüberwachungselektrode) eingespeist werden, wenn an den Messelektroden eine induzierte Messspannung detektiert wird und die gemessenen Werte in die Bestimmung der strömungsgeschwindigkeitsabhängigen Messgröße eingehen.

Vorteilhafte Ausgestaltung der Erfindung sind Gegenstand der Unteransprüche.

Eine Ausgestaltung sieht vor, dass es sich bei der weiteren Elektrode um eine Füllstandsüberwachungselektrode handelt.

Vorteilhaft an der Einspeisung des Einspeis-Testsignals a über die Füllstandsüberwachungselektrode ist, die damit verbundene reduzierte Störung der Durchflussmessung.

Eine Ausgestaltung sieht vor, dass es sich bei der weiteren Elektrode um eine weitere Messelektrode handelt.

Eine Ausgestaltung sieht vor, dass die Diagnosegröße Information bezüglich eines aktuellen Füllstandes des Mediums, der Leitfähigkeit des Mediums, eines Kabelbruches einer elektrischen Verbindungsleitung, einem Vorliegen von Gasblasen an der Messelektrode und/oder der weiteren Elektrode und/oder einem Vorliegen eines Belages auf der Messelektrode und/oder der weiteren Elektrode umfasst.

Eine Ausgestaltung sieht vor, dass das Testsignal zumindest abschnittsweise zeitlich veränderlich ausgebildet ist und eine Testsignal-Stärke aufweist, die mit mindestens einer Frequenz alterniert.

Eine Ausgestaltung sieht vor, dass das digitale Einspeise-Testsignal A zumindest abschnittsweise zeitlich veränderlich ausgebildet ist und eine Einspeise-Testsignal-Stärke aufweist, die mit mindestens zwei Frequenzen alterniert.

Eine Ausgestaltung sieht vor, dass das digitale Einspeise-Testsignal A aus einer Überlagerung von mindestens zwei Sinus-Signalen mit unterschiedlichen Frequenzen besteht.

Eine Ausgestaltung sieht vor, dass auf das digitale Einspeise-Testsignal A zumindest abschnittsweise ein Rauschen aufgeprägt ist.

Eine Ausgestaltung sieht vor, dass der Mikrocontroller dazu eingerichtet ist, ein insbesondere digitales Korrelations-Testsignal A" aus dem digitalen Durchfluss-Messsignal D zu extrahieren.

Vorteilhaft an der Ausgestaltung ist, die sich daraus ergebende Verfügbarkeit eines weiteren Testsignales aus der sich eine weitere Diagnosemöglichkeit des magnetisch-induktiven Durchflussmessgerätes ergibt.

Eine Ausgestaltung sieht vor, dass die Messchaltung dazu eingerichtet ist, in Abhängigkeit des digitalen Korrelations-Testsignal A" und des digitalen Test-Messsignal A* eine Information bzgl. einer Teilbefüllung des Messrohres zu bestimmen.

Eine Ausgestaltung sieht vor, dass die Messschaltung dazu eingerichtet ist, einen Einfluss von Elektronikkomponenten der Messschaltung auf das digitale Durchfluss-Messsignal D in Abhängigkeit einer aus dem digitalen Korrelations-Testsignal A" und dem digitalen Test-Messsignal A* ermittelten Kompensationsgröße zu kompensieren.

Eine Ausgestaltung sieht vor, dass das magnetisch-induktive Durchflussmessgerät eine erste Messelektrode und eine zweite Messelektrode umfasst,
**wobei** der erste Analog-Digital-Umsetzer elektrisch mit der ersten Messelektrode verbunden ist,
**wobei** der erste Analog-Digital-Umsetzer dazu eingerichtet ist, ein über die erste Messelektrode bereitgestelltes analoges erstes Durchfluss-Messsignal d1 in ein digitales erstes Durchfluss-Messsignal D1 umzuwandeln,
**wobei** die Messschaltung einen dritten Analog-Digital-Umwandler aufweist, welcher elektrisch mit der zweiten Messelektrode und dem Mikrocontroller verbunden ist,
**wobei** der dritte Analog-Digital-Umsetzer dazu eingerichtet ist, ein über die zweite Messelektrode bereitgestelltes analoges zweites Durchfluss-Messsignal d1 in ein digitales zweites Durchfluss-Messsignal D2 umzuwandeln,
**wobei** das erste Durchfluss-Messsignal und das zweite Durchfluss-Messsignal, insbesondere in Form einer Differenz, in die Bestimmung der strömungsgeschwindigkeitsabhängige Messgröße eingeht.

Die Erfindung wird anhand der nachfolgenden Figuren näher erläutert. Es zeigt:
Fig. 1: einen Querschnitt durch ein magnetisch-induktive Durchflussmessgerät nach dem Stand der Technik;
**Fig. 2****:** eine schematische Darstellung einer ersten Ausgestaltung des magnetisch-induktiven Durchflussmessgerätes;
**Fig. 3****:** eine schematische Darstellung einer zweiten Ausgestaltung des magnetisch-induktiven Durchflussmessgerätes;

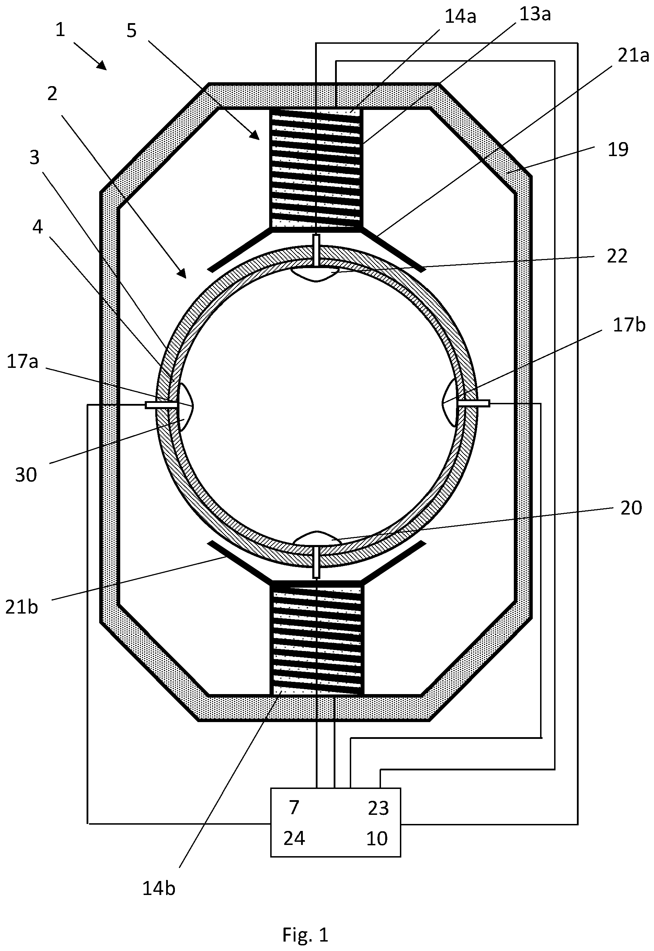

**Fig. 1** zeigt einen Querschnitt durch ein magnetisch-induktive Durchflussmessgerät 1 nach dem Stand der Technik. Der Aufbau und das Messprinzip eines magnetisch-induktiven Durchflussmessgerätes 1 sind grundsätzlich bekannt. Durch ein Messrohr 2 wird ein fließfähiges Medium geleitet, welches eine elektrische Leitfähigkeit aufweist. Das Messrohr 2 umfasst ein mediumsberührendes Trägerrohr 3, welches üblicherweise aus Stahl, Keramik, Kunststoff oder Glas gebildet ist oder diese zumindest umfassen. Eine magnetfelderzeugende Vorrichtung 5 zum Erzeugen eines Magnetfeldes ist so am Trägerrohr 3 angeordnet, dass sich die Magnetfeldlinien im Wesentlichen senkrecht zu einer durch eine Messrohrachse definierten Längsrichtung orientieren. Die magnetfelderzeugende Vorrichtung 5 umfasst üblicherweise eine Sattelspule oder mindestens eine (Zylinder-)Spule 6i. Durch eine Aufnahme 15 der Spule 6i erstreckt sich üblicherweise ein Spulenkern 14i. Als Aufnahme 15 ist das Volumen zu verstehen, welches durch den die Spule 6i bildenden Spulendraht begrenzt wird. Die Aufnahme 15 der Spule 6i kann somit durch eine Spulenhalterung oder durch das gedachte eingeschlossene Volumen gebildet sein. Letzteres tritt ein, wenn der Spulendraht der Spule 6i direkt um den Spulenkern 14i gewickelt ist. Der Spulenkern 14i ist aus einem magnetisch leitenden, insbesondere weichmagnetischen Werkstoff gebildet. Die Vorrichtung 5 zum Erzeugen des Magnetfeldes umfasst einen Polschuh 21i, der an einem Ende des Spulenkerns 14i angeordnet ist. Der Polschuh 21i kann separates Bauteil sein oder monolithisch mit dem Spulenkern 14i verbunden sein. In der abgebildeten Ausgestaltung der Fig. 1 weisen zwei diametral angeordnete Spulen 6a, 6b jeweils einen Spulenkern 14a, 14b und einen Polschuh 21a, 21b auf. Die zwei Spulenkerne 14a, 14b sind über eine Feldrückführung 22 miteinander verbunden. Die Feldrückführung 22 verbindet die jeweils voneinander abgewandten Seiten der Spulenkerne 14a, 14b miteinander. Es sind jedoch auch magnetisch-induktive Durchflussmessgeräte mit genau einer Spule 6 mit genau einem Spulenkern 14 und ohne Feldrückführung bekannt. Die Spule 6 ist mit einer Betriebsschaltung 7 verbunden, welche die Spule 6 mit einem Betriebssignal betreibt. Das Betriebssignal kann eine Spannung mit einem zeitlich veränderlichen Verlauf sein und ist durch Betriebssignalparameter charakterisiert, wobei mindestens einer der Betriebssignalparameter regelbar ist. Das durch die magnetfelderzeugende Vorrichtung 5 aufgebaute Magnetfeld wird durch einen mittels einer Betriebsschaltung 7 getakteten Gleichstrom wechselnder Polarität erzeugt. Dies gewährleistet einen stabilen Nullpunkt und macht die Messung unempfindlich gegenüber Einflüssen durch elektrochemische Störungen. Die zwei Spulen 6a, 6b können separat mit der Betriebsschaltung 7 verbunden oder in Reihe bzw. parallel zueinander geschaltet sein.

Bei angelegtem Magnetfeld entsteht im Messrohr 2 eine durchflussabhängige Potenzialverteilung, welche sich beispielsweise in Form einer induzierten Messspannung erfassen lässt. Eine Vorrichtung 8 zum Abgreifen der induzierten Messspannung ist am Messrohr 2 angeordnet. In der abgebildeten Ausgestaltung ist die Vorrichtung 8 zum Abgreifen der induzierten Messspannung durch zwei gegenüberliegend angeordnete Messelektroden 17a, 17b zum Bilden eines galvanischen Kontaktes mit dem Medium gebildet. Es sind jedoch aus magnetisch-induktive Durchflussmessgeräte bekannt, die an der Außenwandung des Trägerrohres 3 angeordnete Messelektroden aufweisen, die nicht mediumsberührend sind. In der Regel sind die Messelektroden 17a, 17b diametral angeordnet und bilden eine Elektrodenachse bzw. werden durch eine Querachse geschnitten, die senkrecht zu den Magnetfeldlinien und der Längsachse des Messrohres 2 verläuft. Es sind aber auch Vorrichtungen 8 zum Abgreifen der induzierten Messspannung bekannt, welche mehr als zwei Messelektroden aufweisen. Anhand der gemessenen Messspannung kann die strömungsgeschwindigkeitsabhängigen Messgröße bestimmt werden. Die strömungsgeschwindigkeitsabhängigen Messgröße umfasst die Durchflussgeschwindigkeit, den Volumendurchfluss und/oder den Massedurchfluss des Mediums. Eine Messschaltung 23 ist dazu eingerichtet, die an den Messelektroden 17a, 17b anliegende, induzierte Messspannung zu erfassen und eine Auswerteschaltung 24 ist dazu ausgebildet, die strömungsgeschwindigkeitsabhängigen Messgröße zu ermitteln. Die Auswerteschaltung 24 kann Teil des Messumformers sein.

Das Trägerrohr 3 ist häufig aus einem elektrisch leitfähigen Material gebildet, wie z.B. Stahl. Um das Ableiten der an der ersten und zweiten Messelektrode 2, 3 anliegenden Messspannung über das Trägerrohr 3 zu verhindern, wird die Innenwand mit einem isolierenden Material, beispielsweise einem (Kunststoff-) Liner 4 ausgekleidet.

Handelsübliche magnetisch-induktive Durchflussmessgeräte weisen zusätzlich zu den Messelektroden 17a, 17b zwei weitere Elektroden 19, 20 auf. Zum einen dient eine optimalerweise am höchsten Punkt im Messrohr 2 angebrachte Füllstandsüberwachungselektrode 19 dazu, eine Teilbefüllung des Messrohres 1 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Bezugselektrode 20, die üblicherweise diametral zur Füllstandsüberwachungselektrode 19 bzw. am untersten Punkt des Messrohrquerschnittes angebracht ist, dazu, ein kontrolliertes, elektrisches Potenzial im Medium einzustellen. In der Regel wird die Referenzelektrode 20 zum Verbinden des fließenden Mediums mit einem Erdpotenzial eingesetzt.

Die Betriebsschaltung 7, Reglerschaltung 10, Messschaltung 23 und Auswerteschaltung 24 können Teil einer einzelnen Elektronikschaltung sein, oder einzelne Schaltungen bilden. Die Mess-, Betriebs- und/oder Auswerteschaltung 7, 23, 24 ist dazu eingerichtet, das erfindungsgemäße Verfahren auszuführen. Dafür ist die Betriebsschaltung dazu eingerichtet das Betriebssignal zu erzeugen und an der magnetfelderzeugenden Vorrichtung bereitzustellen. Weiterhin ist die Messschaltung dazu eingerichtet die Messspannungswerte zu ermitteln und an die Auswerteschaltung weiterzuleiten. Die Auswerteschaltung ist dazu eingerichtet, den aktuellen Nullpunkt zu ermitteln und für die Bestimmung der strömungsgeschwindigkeitsabhängige Messgröße zu berücksichtigen.

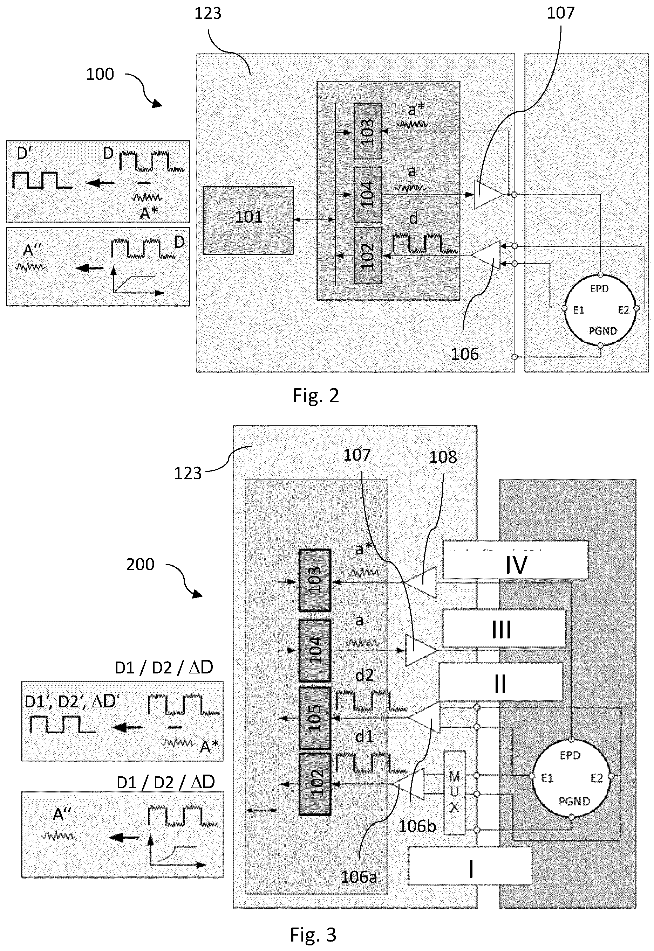

**Fig. 2** zeigt eine schematische Darstellung einer ersten Ausgestaltung des erfindungsgemäßen magnetisch-induktiven Durchflussmessgerätes 100, insbesondere der Messschaltung 123. Das magnetisch-induktive Durchflussmessgerät 100 weist eine erste Messelektrode E1 auf, die in einer Messelektroden-Öffnung des Messrohres angeordnet ist. Die Messelektrode E1 ist elektrisch mit einem Verstärker 106 verbunden. Ebenfalls mit dem Verstärker 106 verbunden ist eine weitere zweite Messelektrode E2, die ebenfalls in einer dafür vorgesehenen Messelektroden-Öffnung angeordnet ist. Die zwei Messelektroden E1, E2 sind dazu eingerichtet, mit dem zu führenden Medium in Kontakt zu gelangen. Es handelt sich somit um mediumsberührende Messelektroden.

Der Verstärker 106 ist dazu eingerichtet, eine Differenz aus den jeweils von den zwei Messelektroden E1, E2 bereitgestellte Messsignal zu ermitteln. Bei dem Messsignal kann es sich jeweils um das zeitlich und strömungsgeschwindigkeitsabhängige elektrische Potential an der jeweiligen Messelektrode handeln. Bei dem verstärkten Durchfluss-Messsignal d handelt es sich um ein analoges Messsignal. Dieses wird an einem ersten Analog-Digital-Umsetzer 102 bereitgestellt, der dazu eingerichtet ist das analoge Durchfluss-Messsignal d in ein digitale Durchfluss-Messsignal D umzuwandeln. Das digitale Durchfluss-Messsignal D wird an einem Microcontroller 101 bereitgestellt. Der Microcontroller 101 ist dazu eingerichtet abhängig von dem digitalen Durchfluss-Messsignal D die strömungsgeschwindigkeitsabhängige Messgröße zu bestimmen.

Das magnetisch-induktive Durchflussmessgerät 100 der ersten Ausgestaltung weist weiterhin eine Erdungselektrode PGND auf, die mediumsberührend ausgebildet ist und dazu eingerichtet ist, das zu führende Medium mit einem Referenzpotential (z.B. Erdpotential) elektrisch zu verbinden.

Das magnetisch-induktive Durchflussmessgerät 100 der ersten Ausgestaltung weist weiterhin eine Füllstandsüberwachungselektrode EPD auf, die diametral zur Erdungselektrode PGND angeordnet ist. Die Füllstandsüberwachungselektrode EPD ist dazu eingerichtet, eine Teilbefüllung des Messrohres zu detektieren. Dafür wird eine digitales Einspeis-Testsignal A durch den Microcontroller 101 erzeugt und mittels eines Digital-Analog-Umsetzers 104 in ein analoges Einspeis-Testsignal a umgewandelt. Für die Diagnose des magnetisch-induktiven Durchflussmessgerätes weist das digitale Einspeise-Testsignal A zumindest abschnittsweise eine zeitlich veränderlich ausgebildete Testsignal-Stärke, die mit mindestens einer Frequenz bzw. bevorzugt mindestens zwei Frequenzen alterniert. Ein Beispiel für ein digitales Einspeise-Testsignal A wäre eine Überlagerung von mindestens zwei Sinus-Signalen mit unterschiedlichen Frequenzen. Das erzeugte analoge Einspeis-Testsignal a wird mittels eines Verstärkers 107 verstärkt und in die Füllstandsüberwachungselektrode EPD eingespeist. Über die Füllstandsüberwachungselektrode EPD wird ein analoges Test-Messsignal a* abgegriffen, das sich aus der Wechselwirkung des analogen Einspeis-Testsignals a mit dem Verbindungskabel und dem Medium ergibt. Dieses wird über einen zweiten Analog-Digital-Umsetzer 103 in ein digitales Test-Messsignal A* umgewandelt und an dem Microcontroller 101 bereitgestellt. Abhängig vom Anwendungsfall bzw. digitalen Einspeis-Testsignal A steckt in dem digitalen Test-Messsignal A* die Information bzgl. der Kabelqualität (Kabelbruch), die Leitfähigkeit des Mediums, der aktuelle Füllstand des Messrohres, das Vorliegen von Gasblasen an einer der Messelektroden und/oder das Vorliegen eines Belages auf einer der Elektroden.

Der Microcontroller 101 ist dazu eingerichtet, mittels einer Korrelation den Anteil des digitalen Test-Messsignales A* vom digitalen Durchfluss-Messsignal D zu extrahieren und anhand des korrigierten Durchfluss-Messsignales D' die strömungsgeschwindigkeitsabhängige Messgröße zu bestimmen. Durch das gleichzeitige Einspeisen des analogen Einspeis-Testsignals a und Messen des analogen Durchfluss-Messsignals d, findet sich das Einspeis-Testsignal a im gemessenen Durchfluss-Messsignal d wieder. Dies führt zu einer verfälschten strömungsgeschwindigkeitsabhängigen Messgröße. Daher wurde bisher davon abgesehen, die Diagnose während der Durchfluss-Messung durchzuführen. Da erfindungsgemäß das analoge Test-Messsignal a* ebenfalls gemessen wird und daher bekannt ist, kann der Einfluss des Einspeis-Testsignals a auf die Durchflussmessung kompensiert bzw. minimiert werden.

Der Mikrocontroller 101 ist ebenfalls dazu eingerichtet, insbesondere gleichzeitig, abhängig vom digitalen Test-Messsignal A* und vom, insbesondere digitalen, Einspeis-Testsignal A eine Diagnosegröße oder eine Prozessgröße zu bestimmen. Bei der Diagnosegröße kann es sich um eine Größe handeln, die für eine Information bezüglich eines aktuellen Füllstandes des Mediums, der Leitfähigkeit des Mediums, eines Kabelbruches einer elektrischen Verbindungsleitung, einem Vorliegen von Gasblasen an der Messelektrode E1 und/oder der weiteren Elektrode E2 und/oder einem Vorliegen eines Belages auf der Messelektrode E1 und/oder der weiteren Elektrode E2 steht. Ein Mikrocontroller 101, welcher dazu eingerichtet ist Blasen zu detektieren wird in DE10 2009 028 659 A1 offenbart. Verfahren zur Kabelbruchdetektionen werden in DE 10 2009 045 904 A1, WO 2019 121 101 A1 und DE 10 2014 119 453 A1 offenbart. Die Detektion von Sedimentation mittels einen Einspeis-Testsignal A wird in der DE 10 2018 132 058 A1 gelehrt. In der WO 2010 121 908 A1 wird die Bestimmung der Leitfähigkeit des Mediums mittels der Messelektroden offenbart. In den Patentschriften EP 1 108 988 A1 und DE 10 2007 014 469 A1 werden jeweils ein Verfahren zur Belagsdetektion gelehrt. Es wird auf alle genannten Patentschriften vollumfänglich Bezug genommen.

Zusätzlich kann zum digitalen Test-Messsignal A* auch ein digitales Korrelations-Testsignal A" aus dem digitalen Durchfluss-Messsignal D ermittelt werden. Vergleicht man die beiden Signale so lässt sich eine Information bzgl. einer Teilbefüllung des Messrohres 2 bestimmen. Außerdem oder alternativ lässt sich ausgehend von dem digitalen Korrelations-Testsignal A" und dem digitalen Test-Messsignal A* ein Einfluss der Elektronikkomponenten der Messschaltung 23 auf das digitale Durchfluss-Messsignal D kompensieren. Das digitale Korrelations-Testsignal A" lässt sich beispielsweise durch Anwendung einer Fast-Fourier-Transformation auf das digitale Durchfluss-Messsignal D ermitteln. Alternativ lässt sich das digitale Korrelations-Testsignal A" auch mittels eines Hochpass-Filters aus dem digitalen Durchfluss-Messsignal D bestimmen.

**Fig. 3** zeigt eine schematische Darstellung einer zweiten Ausgestaltung des magnetisch-induktiven Durchflussmessgerätes 200, insbesondere der Messschaltung 123. Die erste Messelektrode E1, die zweite Messelektrode E2 und ebenfalls die Erdungselektrode PGND sind mit einem Multiplexer MUX elektrisch verbunden. Der Multiplexer MUX ist über seine zwei Ausgänge mit einem Verstärker 106a elektrisch verbunden und dazu eingerichtet, die drei Eingänge für die erste Messelektrode E1, die zweite Messelektrode E2 und die Erdungselektrode PGND schaltend mit den zwei Ausgängen zu verbinden. Somit können die einzelnen elektrischen Potentiale, die an den Messelektroden E1, E2 anliegen relativ zueinander und zu einem Referenzpotential gemessen werden (Schritt I). Die erste Messelektrode E1 und die zweite Messelektrode E2 sind ebenfalls mit einem weiteren Verstärker 106b elektrisch verbunden. Das verstärkte analoge erste Durchfluss-Messsignal d1 wird an dem ersten Analog-Digital-Umsetzer 102 bereitgestellt. Das verstärkte analoge zweite Durchfluss-Messsignal d2 wird an einem dritten Analog-Digital-Umwandler 105 bereitgestellt. Beide Analog-Digital-Umwandler 102, 105 sind dazu eingerichtet, das eingehende analoge Messsignal in ein digitales Messsignal umzuwandeln, damit der Microcontroller (nicht abgebildet) mit dem digitalen erstes Durchfluss-Messsignal D1 und dem digitalen erstes Durchfluss-Messsignal D1, insbesondere eine Differenz über die beiden Durchfluss-Messsignale D1, D2 eine Bestimmung der strömungsgeschwindigkeitsabhängigen Messgröße und der Diagnosegröße ausführen kann (Schritt II). Die Einspeisung des analogen Einspeis-Testsignal a erfolgt wie für Fig. 1 beschrieben (Schritt III). Anders als in der ersten Ausgestaltung ist in der zweiten Ausgestaltung zwischen Füllstandsüberwachungselektrode EPD und zweitern Analog-Digital-Umsetzer 103 ein Verstärker 108 für eine hochauflösende Rückmessung des analogen Test-Messsignales a* eingerichtet.

### BEZUGSZEICHENLISTE

magnetisch-induktives Durchflussmessgerät 1
Messrohr 2
Trägerrohr 3
Liner 4
magnetfelderzeugenden Vorrichtung 5
Betriebsschaltung 7
Reglerschaltung 10
Spule 13i
Spulenkern 14i
Messelektrode 17i
Feldrückführungskörper 19
Polschuh 21i
Füllstandsüberwachungselektrode 22
Messschaltung 23
Auswerteschaltung 24
Microcontroller 101
erster Analog-Digital-Umsetzer 102
zweiter Analog-Digital-Umsetzer 103
Digital-Analog-Umsetzer 104
dritter Analog-Digital-Umwandler 105
Verstärker 106i
Verstärker 107
Verstärker 108
erste Messelektrode E1
zweite Messelektrode E2
Füllstandsüberwachungselektrode EPD
Erdungselektrode PGND
Multiplexer MUX
analoges Durchfluss-Messsignal d
digitales Durchfluss-Messsignal D
korrigiertes digitales Durchfluss-Messsignal D'
analoges erstes Durchfluss-Messsignal d1
analoges zweites Durchfluss-Messsignal d2
digitales erstes Durchfluss-Messsignal D1
digitales zweites Durchfluss-Messsignal D2
analoges Einspeis-Testsignal a
digitales Einspeis-Testsignal A
analoges Test-Messsignal a*
digitales Test-Messsignal A*
digitales Korrelations-Testsignal A"

## Patentansprüche

1. Magnetisch-induktives Durchflussmessgerät (1) zum Ermitteln einer strömungsgeschwindigkeitsabhängigen Messgröße eines fließfähigen Mediums, umfassend:
- ein Messrohr (2) zum Führen des Mediums;
- mindestens eine Messelektrode (E1, 17a), welche am Messrohr (2) angeordnet ist;
- eine weitere Elektrode (20, 22), welche am Messrohr (2) angeordnet ist;
- eine magnetfelderzeugende Vorrichtung (5) zum Erzeugen eines das Messrohr (2) zumindest abschnittsweise durchdringenden Magnetfeldes;
- eine Messschaltung (23) mit einem Mikrocontroller (101),
**wobei** die Messschaltung (23) einen ersten Analog-Digital-Umsetzer (102) aufweist, welcher elektrisch mit der mindestens einen Messelektrode (E1) und dem Mikrocontroller (101) verbunden ist,
**wobei** der erste Analog-Digital-Umsetzer (102) dazu eingerichtet ist, ein über die mindestens eine Messelektrode (E1) bereitgestelltes analoges Durchfluss-Messsignal d in ein digitales Durchfluss-Messsignal D umzuwandeln,
**wobei** die Messschaltung (23) einen Digital-Analog-Umsetzer (104) aufweist, welcher elektrisch mit der weiteren Elektrode (20, 22) verbunden ist,
**wobei** der Digital-Analog-Umsetzer (104) dazu eingerichtet ist, ein über den Microcontroller (101) bereitgestelltes digitales Einspeis-Testsignal A in eine analoges Einspeis-Testsignal a umzuwandeln und dieses in die weitere Elektrode (20, 22) einzuspeisen,
**wobei** die Messschaltung (23) einen zweiten Analog-Digital-Umsetzer (103) aufweist, welcher elektrisch mit der weiteren Elektrode (20, 22) verbunden ist,
**wobei** der zweite Analog-Digital-Umsetzer (103) dazu eingerichtet ist, ein über die weitere Elektrode (20, 22) bereitgestelltes analoges Test-Messsignal a* in ein digitales Test-Messsignal A* umzuwandeln,
**wobei** der Mikrocontroller (101) dazu eingerichtet ist, mittels einer Korrelation den Anteil des digitalen Test-Messsignales A* vom digitalen Durchfluss-Messsignal D zu extrahieren und anhand des korrigierten Durchfluss-Messsignales D' die strömungsgeschwindigkeitsabhängige Messgröße zu bestimmen, und/oder
**wobei** der Mikrocontroller (101) dazu eingerichtet ist, insbesondere gleichzeitig, abhängig vom digitalen Test-Messsignal A* und vom, insbesondere digitalen, Einspeis-Testsignal A eine Diagnosegröße oder eine Prozessgröße zu bestimmen.

2. Magnetisch-induktives Durchflussmessgerät (1) nach Anspruch 1,
**wobei** es sich bei der weiteren Elektrode (E2, 20, 22) um eine Füllstandsüberwachungselektrode (EPD) handelt.

3. Magnetisch-induktives Durchflussmessgerät (1) nach Anspruch 1,
**wobei** es sich bei der weiteren Elektrode (20, 22) um eine weitere Messelektrode (E2) handelt.

4. Magnetisch-induktives Durchflussmessgerät (1) nach einem der vorherigen Ansprüche,
**wobei** die Diagnosegröße Information bezüglich eines aktuellen Füllstandes des Mediums, der Leitfähigkeit des Mediums, eines Kabelbruches einer elektrischen Verbindungsleitung, einem Vorliegen von Gasblasen an der Messelektrode (E1) und/oder der weiteren Elektrode (E2, 20, 22) und/oder einem Vorliegen eines Belages auf der Messelektrode (E1) und/oder der weiteren Elektrode (E2, 20, 22) umfasst.

5. Magnetisch-induktives Durchflussmessgerät (1) nach einem der vorherigen Ansprüche,
**wobei** das digitale Einspeise-Testsignal zumindest abschnittsweise zeitlich veränderlich ausgebildet ist und eine Testsignal-Stärke aufweist, die mit mindestens einer Frequenz alterniert.

6. Magnetisch-induktives Durchflussmessgerät (1) nach einem der vorherigen Ansprüche,
**wobei** das digitale Einspeise-Testsignal A zumindest abschnittsweise zeitlich veränderlich ausgebildet ist und eine Einspeise-Testsignal-Stärke aufweist, die mit mindestens zwei Frequenzen alterniert.

7. Magnetisch-induktives Durchflussmessgerät (1) nach einem der vorherigen Ansprüche,
**wobei** das digitale Einspeise-Testsignal A aus einer Überlagerung von mindestens zwei Sinus-Signalen mit unterschiedlichen Frequenzen besteht.

8. Magnetisch-induktives Durchflussmessgerät nach einem der vorherigen Ansprüche,
**wobei** auf das digitale Einspeise-Testsignal A zumindest abschnittsweise ein, insbesondere künstliches, Rauschen aufgeprägt ist.

9. Magnetisch-induktives Durchflussmessgerät (1) nach einem der vorherigen Ansprüche,
**wobei** der Mikrocontroller (101) dazu eingerichtet ist, ein insbesondere digitales Korrelations-Testsignal A" aus dem digitalen Durchfluss-Messsignal D zu extrahieren.

10. Magnetisch-induktives Durchflussmessgerät (1) nach Anspruch 9,
**wobei** die Messchaltung (23) dazu eingerichtet ist, in Abhängigkeit des digitalen Korrelations-Testsignal A" und des digitalen Test-Messsignal A* eine Information bzgl. einer Teilbefüllung des Messrohres (2) zu bestimmen.

11. Magnetisch-induktives Durchflussmessgerät (1) nach Anspruch 9 oder 10,
**wobei** die Messschaltung (23) dazu eingerichtet ist, einen Einfluss von Elektronikkomponenten der Messschaltung (23) auf das digitale Durchfluss-Messsignal D in Abhängigkeit einer aus dem digitalen Korrelations-Testsignal A" und dem digitalen Test-Messsignal A* ermittelten Kompensationsgröße zu kompensieren.

12. Magnetisch-induktives Durchflussmessgerät (1) nach einem der vorherigen Ansprüche,
**wobei** das magnetisch-induktive Durchflussmessgerät (1) eine erste Messelektrode (E1) und eine zweite Messelektrode (E2) umfasst,
**wobei** der erste Analog-Digital-Umsetzer (102) elektrisch mit der ersten Messelektrode (E1) verbunden ist,
**wobei** der erste Analog-Digital-Umsetzer (102) dazu eingerichtet ist, ein über die erste Messelektrode (E1) bereitgestelltes analoges erstes Durchfluss-Messsignal d1 in ein digitales erstes Durchfluss-Messsignal D1 umzuwandeln,
**wobei** die Messschaltung (23) einen dritten Analog-Digital-Umwandler (105) aufweist, welcher elektrisch mit der zweiten Messelektrode (E2) und dem Mikrocontroller (101) verbunden ist,
**wobei** der dritte Analog-Digital-Umsetzer dazu eingerichtet ist, ein über die zweite Messelektrode (E2) bereitgestelltes analoges zweites Durchfluss-Messsignal d2 in ein digitales zweites Durchfluss-Messsignal D2 umzuwandeln,
**wobei** das digitale erste Durchfluss-Messsignal D1 und das digitale zweite Durchfluss-Messsignal D2, insbesondere in Form einer Differenz ΔD, in die Bestimmung der strömungsgeschwindigkeitsabhängige Messgröße eingeht.

## Claims

1. A magneto-inductive flowmeter (1) for determining a flow velocity-dependent measured variable of a flowable medium, comprising:
- A measuring tube (2) for conducting the medium;
- at least one measuring electrode (E1, 17a) which is arranged on the measuring tube (2);
- an additional electrode (20, 22) which is arranged on the measuring tube (2);
- a magnetic-field-generating device (5) for generating a magnetic field which passes through at least some sections of the measuring tube (2);
- a measuring circuit (23) with a microcontroller (101),
**wherein** the measuring circuit (23) has a first analog-to-digital converter (102) which is electrically connected to the at least one measuring electrode (E1) and the microcontroller (101),
**wherein** the first analog-to-digital converter (102) is configured to convert an analog flow measurement signal d supplied via the at least one measuring electrode (E1) into a digital flow measurement signal D,
**wherein** the measuring circuit (23) has a digital-to-analog converter (104) which is electrically connected to the additional electrode (20, 22),
**wherein** the digital-to-analog converter (104) is configured to convert a digital feed test signal A supplied via the microcontroller (101) into an analog feed test signal a and to supply this to the additional electrode (20, 22),
**wherein** the measuring circuit (23) has a second analog-to-digital converter (103) which is electrically connected to the additional electrode (20, 22),
**wherein** the second analog-to-digital converter (103) is configured to convert an analog test measurement signal a* supplied via the additional electrode (20, 22) into a digital test measurement signal A*,
**wherein** the microcontroller (101) is configured to extract the proportion of the digital test measurement signal A* from the digital flow measurement signal D by means of correlation and to determine the flow velocity-dependent measured variable based on the corrected flow measurement signal D', and/or
**wherein** the microcontroller (101) is configured to determine, in particular simultaneously, a diagnostic variable or a process variable depending on the digital test measurement signal A* and on the, in particular digital, feed test signal A.

2. The magneto-inductive flowmeter (1) as claimed in claim 1,
**wherein** the additional electrode (E2, 20, 22) is a fill level monitoring electrode (EPD).

3. The magneto-inductive flowmeter (1) as claimed in claim 1,
**wherein** the additional electrode (20, 22) is an additional measuring electrode (E2).

4. The magneto-inductive flowmeter (1) as claimed in one of the preceding claims,
**wherein** the diagnostic variable comprises information regarding a current fill level of the medium, the conductivity of the medium, a cable break of an electrical connecting cable, the presence of gas bubbles at the measuring electrode (E1) and/or the additional electrode (E2, 20, 22) and/or the presence of a coating on the measuring electrode (E1) and/or the additional electrode (E2, 20, 22).

5. The magneto-inductive flowmeter (1) as claimed in one of the preceding claims,
**wherein** the digital feed test signal is time-variable at least in sections and has a test signal strength which alternates with at least one frequency.

6. The magneto-inductive flowmeter (1) as claimed in one of the preceding claims,
**wherein** the digital feed test signal A is time-variable at least in sections and has a feed test signal strength which alternates with at least two frequencies.

7. The magneto-inductive flowmeter (1) as claimed in one of the preceding claims,
**wherein** the digital feed test signal A consists of an overlap of at least two sinusoidal signals with different frequencies.

8. The magneto-inductive flowmeter as claimed in one of the preceding claims,
**wherein** signal noise, in particular artificial signal noise, is superimposed on the digital feed test signal A at least in sections.

9. The magneto-inductive flowmeter (1) as claimed in one of the preceding claims,
**wherein** the microcontroller (101) is configured to extract an, in particular digital, correlation test signal A" from the digital flow measurement signal D.

10. The magneto-inductive flowmeter (1) as claimed in claim 9,
**wherein** the measuring circuit (23) is configured to determine information regarding partial filling of the measuring tube (2) depending on the digital correlation test signal A" and the digital test measurement signal A*.

11. The magneto-inductive flowmeter (1) as claimed in claim 9 or 10,
**wherein** the measuring circuit (23) is configured to compensate for an effect that electronic components of the measuring circuit (23) have on the digital flow measurement signal D depending on a compensation variable determined from the digital correlation test signal A" and the digital test measurement signal A*.

12. The magneto-inductive flowmeter (1) as claimed in one of the preceding claims,
**wherein** the magneto-inductive flowmeter (1) comprises a first measuring electrode (E1) and a second measuring electrode (E2),
**wherein** the first analog-to-digital converter (102) is electrically connected to the first measuring electrode (E1),
**wherein** the first analog-to-digital converter (102) is configured to convert an analog first flow measurement signal d1 supplied via the first measuring electrode (E1) into a digital first flow measurement signal D1,
**wherein** the measuring circuit (23) has a third analog-to-digital converter (105) which is electrically connected to the second measuring electrode (E2) and the microcontroller (101),
**wherein** the third analog-to-digital converter is configured to convert an analog second flow measurement signal d2 supplied via the second measuring electrode (E2) into a digital second flow measurement signal D2,
**wherein** the digital first flow measurement signal D1 and the digital second flow measurement signal D2, in particular in the form of a difference ΔD, are taken into consideration when determining the flow velocity-dependent measured variable.

## Revendications

1. Débitmètre électromagnétique (1) destiné à la détermination d'une grandeur de mesure dépendante de la vitesse d'écoulement d'un produit, lequel débitmètre comprend :
- un tube de mesure (2) destiné à guider le produit ;
- au moins une électrode de mesure (E1, 17a), laquelle est disposée sur le tube de mesure (2) ;
- une autre électrode (20, 22), laquelle est disposée sur le tube de mesure (2) ;
- un dispositif générateur de champ magnétique (5), lequel est destiné à générer un champ magnétique traversant le tube de mesure (2) au moins par sections ;
- un circuit de mesure (23) comprenant un microcontrôleur (101),
**pour lequel** le circuit de mesure (23) comporte un premier convertisseur analogique-numérique (102), lequel convertisseur est relié électriquement à l'au moins une électrode de mesure (E4) et au microcontrôleur (101),
**pour lequel** le premier convertisseur analogique-numérique (102) est conçu pour convertir un signal de mesure de débit analogique d fourni par l'au moins une électrode de mesure (E4) en un signal de mesure de débit numérique D,
**pour lequel** le circuit de mesure (23) comprend en outre un convertisseur numérique-analogique (104), lequel convertisseur est relié électriquement à l'autre électrode (20, 22),
**pour lequel** le convertisseur numérique-analogique (104) est conçu pour convertir un signal de test d'injection numérique A fourni par le microcontrôleur (101) en un signal de test d'injection analogique a et pour injecter ce dernier dans l'autre électrode (20, 22),
**pour lequel** le circuit de mesure (23) comporte un deuxième convertisseur analogique-numérique (103), lequel convertisseur est relié électriquement à l'autre électrode (20, 22),
**pour lequel** le deuxième convertisseur analogique-numérique (103) est conçu pour convertir un signal de mesure de test analogique a* fourni par l'autre électrode (20, 22) en un signal de mesure de test numérique A*,
**pour lequel** le microcontrôleur (101) est conçu pour extraire, par corrélation, la composante du signal de mesure de test numérique A* du signal de mesure de débit numérique D et pour déterminer, à partir du signal de mesure de débit corrigé D', la grandeur de mesure dépendante de la vitesse d'écoulement, et/ou
**pour lequel** le microcontrôleur (101) est conçu pour déterminer, notamment simultanément, une grandeur de diagnostic ou une grandeur de process en fonction du signal de mesure de test numérique A* et du signal de test d'injection A, notamment numérique.

2. Débitmètre électromagnétique (1) selon la revendication 1,
**pour lequel** il s'agit, concernant l'autre électrode (E2, 20, 22), d'une électrode de surveillance du niveau (EPD).

3. Débitmètre électromagnétique (1) selon la revendication 1,
**pour lequel** il s'agit, concernant l'autre électrode (20, 22), d'une autre électrode de mesure (E2).

4. Débitmètre électromagnétique (1) selon l'une des revendications précédentes,
**pour lequel** la grandeur de diagnostic comprend des informations relatives au niveau actuel du produit, à la conductivité du produit, à une rupture de câble d'une ligne de connexion électrique, à la présence de bulles de gaz au niveau de l'électrode de mesure (E1) et/ou de l'autre électrode (E2, 20, 22), et/ou à la présence d'un dépôt sur l'électrode de mesure (E1) et/ou sur l'autre électrode (E2, 20, 22).

5. Débitmètre électromagnétique (1) selon l'une des revendications précédentes,
**pour lequel** le signal de test numérique d'injection est conçu de manière à varier dans le temps, au moins par sections, et présente une intensité de signal de test qui alterne à au moins une fréquence.

6. Débitmètre électromagnétique (1) selon l'une des revendications précédentes,
**pour lequel** le signal de test d'injection numérique A est conçu pour varier dans le temps, au moins par sections, et présente une intensité de signal de test d'injection qui alterne entre au moins deux fréquences.

7. Débitmètre électromagnétique (1) selon l'une des revendications précédentes,
**pour lequel** le signal numérique de test d'injection A est constitué d'une superposition d'au moins deux signaux sinusoïdaux de fréquences différentes.

8. Débitmètre électromagnétique (1) selon l'une des revendications précédentes,
**pour lequel** le signal de test d'injection numérique A est modulé, au moins par sections, par un bruit, notamment artificiel.

9. Débitmètre électromagnétique (1) selon l'une des revendications précédentes,
**pour lequel** le microcontrôleur (101) est conçu pour extraire, à partir du signal numérique de mesure de débit D, un signal de test de corrélation A", notamment numérique.

10. Débitmètre électromagnétique (1) selon la revendication 9,
**pour lequel** le circuit de mesure (23) est conçu pour déterminer, en fonction du signal de test de corrélation numérique A" et du signal de mesure de test numérique A*, une information relative au remplissage partiel du tube de mesure (2).

11. Débitmètre électromagnétique (1) selon la revendication 9 ou 10,
**pour lequel** le circuit de mesure (23) est conçu pour compenser l'influence des composants électroniques du circuit de mesure (23) sur le signal de mesure de débit numérique D en fonction d'une grandeur de compensation déterminée à partir du signal de test de corrélation numérique A" et du signal de mesure de test numérique A*.

12. Débitmètre électromagnétique (1) selon l'une des revendications précédentes,
**pour lequel** le débitmètre électromagnétique (1) comprend une première électrode de mesure (E1) et une deuxième électrode de mesure (E2),
**pour lequel** le premier convertisseur analogique-numérique (102) est relié électriquement à la première électrode de mesure (E1),
**pour lequel** le premier convertisseur analogique-numérique (102) est conçu pour convertir un premier signal analogique de mesure de débit d1, fourni par la première électrode de mesure (E1), en un premier signal numérique de mesure de débit D1,
**pour lequel** le circuit de mesure (23) comporte un troisième convertisseur analogique-numérique (105), lequel est relié électriquement à la deuxième électrode de mesure (E2) et au microcontrôleur (101),
**pour lequel** le troisième convertisseur analogique-numérique est conçu pour convertir un deuxième signal analogique de mesure de débit d2, fourni par la deuxième électrode de mesure (E2), en un deuxième signal numérique de mesure de débit D2,
**pour lequel** le premier signal numérique de mesure de débit D1 et le deuxième signal numérique de mesure de débit D2, notamment sous la forme d'une différence ΔD, entrent dans le calcul de la grandeur de mesure dépendante de la vitesse d'écoulement.
